# EUROPEAN PATENT SPECIFICATION

(11) **EP 2 693 706 B1**
(45) Date of publication and mention of the grant of the patent: **14.06.2017**
(21) Application number: 11862707.4
(22) Date of filing: 10.11.2011
(51) Int. Cl.: H04L 12/753, H04L 12/735, H04L 12/703, H04L 12/707, H04L 12/723

(54) **METHOD AND DEVICE FOR IMPLEMENTING MULTI-PROTECTION OVERLAPPED PROTECTION GROUPS**
VERFAHREN UND VORRICHTUNG ZUR IMPLEMENTIERUNG VON ÜBERLAPPENDEN MEHRFACHSCHUTZGRUPPEN
PROCÉDÉ ET DISPOSITIF PERMETTANT DE METTRE EN UVRE DES GROUPES DE PROTECTION RECOUVERTS MULTI-PROTECTION

(30) Priority: 29.03.2011 CN 201110077167
(43) Date of publication of application: 05.02.2014
(73) Proprietor: ZTE Corporation, Shenzhen, Guangdong 518057 (CN)
(72) Inventor: CAO, Chaopeng, Shenzhen Guangdong 518057 (CN)
(74) Representative: Lavoix
(86) International application number: PCT/CN2011/082050
(87) International publication number: WO 2012/129907

(56) References cited:
- EP-A1- 2 237 529
- WO-A1-00/28704
- WO-A1-00/28704
- CN-A- 101 242 309
- CN-A- 101 621 468
- CN-A- 102 143 076
- CN-A- 102 143 076

## Description

### TECHNICAL FIELD

The disclosure relates to communications, and particularly to a method and device for implementing Multi-protocol Label Switching Transport Profile (MPLS-TP) tunnel-protected multi-protection overlapped protection groups.

### BACKGROUND

MPLS-TP is a connection-oriented MPLS-based packet transfer technology defined by the Telecommunication Standardization Sector of the International Telegraph Union (ITU-T). An MPLS-TP data forwarding plane is a sub-set of the MPLS and data on the MPLS-TP data forwarding plane is forwarded based on an MPLS-TP label. MPLS-TP is an application of MPLS in a transport network, in which some complicated functions of an MPLS data forwarding plane are simplified and functions including connection-oriented Operations, Administration and Maintenance (OAM) and protection and restoration are added.

The protection and restoration function is mainly implemented by binding a standby tunnel (hereinafter referred to as backup tunnel) to a primary tunnel. Generally, one primary tunnel may correspond to one backup tunnel. When the primary tunnel fails, a service can be timely switched to the backup tunnel to perform traffic forwarding.

Because of networking demands or requirements on a primary link, one primary tunnel generally corresponds to a plurality of backup tunnels in different protection groups or a primary tunnel in a certain protection group may be a primary tunnel in another protection group, which may result in a multi-protection overlapped protection group. In this case, it becomes a problem to be solved urgently of how to perform service switching properly upon detecting failure or normality of a tunnel.

CN 102143076A discloses a method and device for implementing multi-protection overlapped protection groups. The method for implementing the protection groups includes: constructing M binary trees from multiple protection groups in a network according to their respective types, each binary tree comprising a primary tunnel and a backup tunnel, wherein each binary tree has a unique primary tunnel, a first side node of the binary tree includes a primary tunnel at a bottom level and protection groups of the binary tree, and a second side node includes backup tunnels of the protection groups of the binary tree; traversing the M binary trees to find out two binary trees having the same primary tunnel and backup tunnels; performing binary tree adjustment for (M-1) times, so as to implement a multi-protection overlapped protection group; and during each binary tree adjustment, using a root node of the binary tree in which the primary tunnel is located to replace a backup tunnel of another binary tree. The disclosure can implement switching of the protection groups conveniently and quickly in the multi-protection overlapping scenario, thereby achieving the effect of multi-protection.

WO 00/28704 A1 discloses a method for compressing a routing table involves constructing a binary tree representation of the routing table. The compression method propagates routing information down to the tree leaves. During this pass, the program assigns every leaf node in the tree an associated next hop or an inherited next hop rom a higher level ancestral node. In a second pass, the compression method migrates prevalent next hops up the tree. This bottom up pass involves forming a set of next hops at a parent node by supernetting the sets of next hops A and B for a pair of child nodes corresponding to the parent node, according to the following operation: *A*B* = *A* ∪ *B*, if *A* ∩ *B* = *φ* and *A* ∩ *B*, if *A* ∩ *B* ≠ *φ* where *A***B* is a set of next hops formed at the parent node. In the third pass, the compression method eliminates redundant branches in the tree. This top down pass begins at a parent node and selects a next hop from a parent node. The method then examines a child node branching from the parent node to determine whether the selected next hop is an element of next hops for the child node. If it is, the method eliminates the next hops for the child node. After the tree is restructured by the three-pass process, the compression method converts it back to a new routing table.

Another example of constructing a binary tree representation of a routing table is disclosed in EP2237529.

### SUMMARY

The disclosure provides a method and device for implementing a multi-protection overlapped protection group to better solve the problem of protection group switching logic.

According to an aspect of the disclosure, a method for implementing multi-protection overlapped protection groups of the disclosure includes: Step A: constructing M binary trees from multiple protection groups in a network according to their respective types, each protection group comprising a primary tunnel and a backup tunnel, wherein each binary tree has a unique primary tunnel, a first side node of the binary tree includes a primary tunnel at a bottom level and protection groups of the binary tree, and a second side node includes backup tunnels of the protection groups of the binary tree; Step B: traversing the M binary trees to find out two binary trees in which a primary tunnel of one of the two binary trees is the same as a backup tunnel of the other of the two binary trees, performing each binary tree adjustment by using a root node of the binary tree in which the primary tunnel is located to replace the backup tunnel of the other binary tree; Step C: performing the binary tree adjustment for (M-1) times; wherein the protection groups having the same primary tunnel are classified into a type.

Preferably, in Step A, generating each binary tree may include: constructing N binary tree units from N protection groups having a same primary tunnel, wherein a root node of each binary tree unit is a protection group, a first side node is a primary tunnel of the protection group and a second side node is a backup tunnel of the protection group;
setting priorities of the N protection groups from lowest to highest as 1,2......N and performing binary tree unit combination for (N-1) times; and during each binary tree unit combination, replacing a primary tunnel of a binary tree of which priority is (N-1) with a root node of a binary tree unit of which priority is N.

Preferably, Step D of protection group state query may be performed after Step C, including: when a tunnel is detected as invalid or normal, checking, by each protection group of the multi-protection overlapped protection groups, tunnel state information of all leaf nodes at the first side of the protection group, and placing the protection group state as primary valid if there is a normal tunnel; otherwise, checking, by each protection group of the multi-protection overlapped protection groups, tunnel state information of all leaf nodes at a second side of the protection group, and placing the protection group state as backup valid if there is a normal tunnel; otherwise, placing the protection group state as invalid.

Preferably, Step E of path selection may be performed after Step D, including: going downwards from the root node of the multi-protection overlapped protection groups, selecting a first side node if the protection group state is primary valid and selecting a second side node if the protection group state is backup valid, until a current valid tunnel is determined.

The M and N meet M ≥ 1, N ≥ 1.

According to an aspect of the disclosure, a device for implementing multi-protection overlapped protection groups of the disclosure includes: a generating module, configured to construct M binary trees from multiple protection groups in a network according to their respective types, each protection group comprising a primary tunnel and a backup tunnel, wherein each binary tree has a unique primary tunnel, a first side node of the binary tree includes a primary tunnel at a bottom level and protection groups of the binary tree, and a second side node includes backup tunnels of the protection groups of the binary tree; a finding module, configured to traverse the M binary trees to find out two binary trees in which a primary tunnel of one of the two binary trees is the same as a backup tunnel of the other of the two binary trees; and an adjusting module configured to, during each binary tree adjustment, use a root node of the binary tree where the primary tunnel locates to replace a backup tunnel of another binary tree and perform the binary tree adjustment for (M-1) times; wherein the protection groups having the same primary tunnel are classified into a type.
preferably, the generating module may include: a constructing sub-module, configured to construct N binary tree units from N protection groups having a same primary tunnel, wherein a root node of each binary tree unit is a protection group, a first side node is a primary tunnel of the protection group and a second side node is a backup tunnel of the protection group; a setting sub-module, configured to set priorities of the N protection groups from lowest to highest as 1,2......N and perform binary tree unit combination for (N-1) times; and a generating sub-module configured to, during each binary tree unit combination, replace a primary tunnel of a binary tree of which priority is (N-1) with a root node of a binary tree unit of which priority is N.

Preferably, the device may further include: a state query module configured, when a tunnel is detected as invalid or normal, to be used by each protection group of the multi-protection overlapped protection groups to check tunnel state information of all leaf nodes at the first side of the protection group, wherein the protection group state is placed as primary valid if there is a normal tunnel; otherwise, to be used by each protection group of the multi-protection overlapped protection groups to check tunnel state information of all leaf nodes at a second side of the protection group, wherein the protection group state is placed as backup valid if there is a normal tunnel; otherwise, the protection group state is placed as invalid.

Preferably, the device may further include a path selecting module configured to, go downwards from the root node of the multi-protection overlapped protection groups, select a first side node if the protection group state is primary valid and select a second side node if the protection group state is backup valid, until a current valid tunnel is determined.

The M and N meet M ≥ 1, N ≥ 1.

In relation to the prior art, the beneficial effect of the disclosure lie in that switching logic of the protection groups can be set properly in the multi-protection overlapping scenario so that services can be switched timely, conveniently and quickly.

### BRIEF DESCRIPTION OF THE DRAWINGS

Fig. 1 shows a flowchart of a method for implementing a multi-protection overlapped protection group according to an embodiment of the disclosure;
Fig. 2 shows a flowchart illustrating a process of establishing the multi-protection overlapped protection group according to an embodiment of the disclosure;
Fig. 3 is a flowchart illustrating path selection according to an embodiment of the disclosure;
Fig. 4 shows examples for implementing establishment of the multi-protection overlapped protection group;
Fig. 5 shows a structural diagram of a device for implementing the multi-protection overlapped protection group according to an embodiment of the disclosure; and
Fig. 6 shows a structural diagram of a generating module in Fig. 5.

### DETAILED DESCRIPTION

Hereinafter, the preferred embodiments of the disclosure are described in detail with reference to the accompanying drawings. It should be understood that, the preferred embodiments described below are only used to describe and explain the disclosure, but not to limit the disclosure.

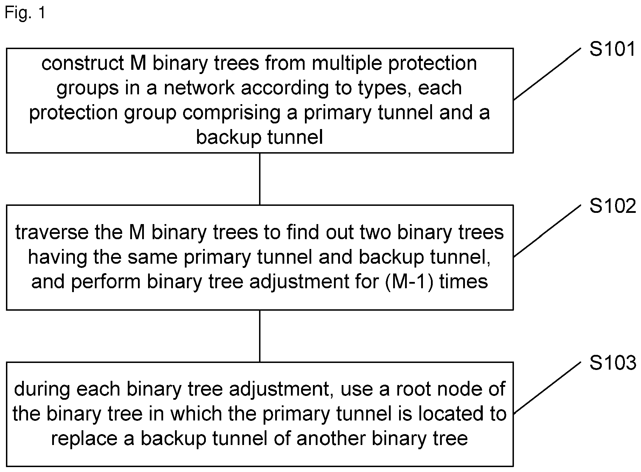

Fig. 1 shows a flowchart of a method for implementing a multi-protection overlapped protection group according to an embodiment of the disclosure. As shown in Fig. 1, the method includes the following steps:
Step 101: M binary trees are constructed from multiple protection groups in a network according to their respective types, each protection group comprising a primary tunnel and a backup tunnel. Each binary tree has a unique primary tunnel, a first side node of the binary tree includes a primary tunnel at a bottom level and protection groups of the binary tree, and a second side node includes backup tunnels of the protection group of the binary tree.
Step 102: the M binary trees are traversed to find out two binary trees having the same primary tunnel and backup tunnels. Binary tree adjustment is performed for (M-1) times, so as to implement multi-protection overlapped protection groups.
Step 103: during each binary tree adjustment, a root node of the binary tree in which the primary tunnel is located is used to replace a backup tunnel of another binary tree.

In Step 101, each binary tree is generated individually.

Specifically, N binary tree units are constructed from N protection groups having a same primary tunnel, a root node of each binary tree unit is a protection group, a first side node is a primary tunnel of the protection group and a second side node is a backup tunnel of the protection group.

Priorities of the N protection groups are set from lowest to highest as 1,2......N and performing binary tree unit combination for (N-1) times.

During each binary tree unit combination, a primary tunnel of a binary tree of which priority is (N-1) is replaced with a root node of a binary tree unit of which priority is N.

Additionally, after Step 103, Step 104 of protection group state query may be performed.

Specifically, when a tunnel is detected as invalid or normal, each protection group of the multi-protection overlapped protection groups checks tunnel state information of all leaf nodes at the first side of the protection group, and places the protection group state as primary valid if there is a normal tunnel; otherwise, each protection group of the multi-protection overlapped protection groups checks tunnel state information of all leaf nodes of a second side of the protection group, and places the protection group state as backup valid if there is a normal tunnel; otherwise, places the protection group state as invalid.

Additionally, after Step 104, Step 105 of path selection may be performed.

Specifically, going downwards from the root node of the multi-protection overlapped protection groups, a first side node is selected if the protection group state is primary valid and a second side node is selected if the protection group state is backup valid, until a current valid tunnel is determined. The M and N meet M ≥ 1, N ≥ 1.

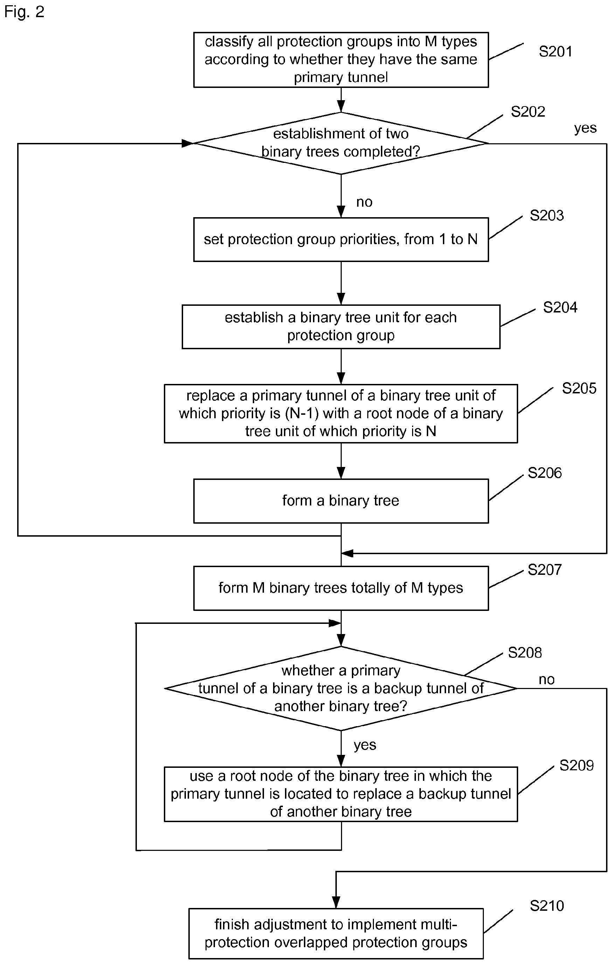

Fig. 2 shows a flowchart illustrating establishment of multi-protection overlapped protection groups according to an embodiment of the disclosure.

As shown in Fig. 2, Step 201: Protection groups having the same primary tunnel are classified into a class, thereby dividing multiple protection groups in a network, each comprising a primary tunnel and a backup tunnel, into M types, where M is larger than or equal to 1.

Step 202: it is determined whether establishment of M binary trees is completed; if yes, perform Step 207; otherwise, perform Step 203.

Step 203: in a type in which a protection group relation has not been established, one primary tunnel corresponds to N backup tunnels, i.e., N protection groups with the same primary tunnel in the type are provided; the priorities of the N protection groups are set as 1,2,...N from the lowest to the highest; the lower the priority is, the slower response switching is.

Step 204: for each protection group in the type, a respective binary tree unit is established. A root node of the binary tree unit is the protection group, a first side node is a primary tunnel of the protection group and a second side node is a backup tunnel of the protection group, thereby forming N binary tree units of the type, and the first side node and the second side node of each binary tree unit are leaf nodes of the binary tree unit.

Step 205: the formed N binary tree units are combined, in which a primary tunnel of a binary tree unit of which priority is (N-1) is replaced with a binary tree unit of which priority is N and a primary tunnel of a binary tree unit of which priority is (N-2) is replaced with a binary tree unit of which priority is (N-1), until a primary tunnel of a binary tree unit of which priority is 1 is replaced with a binary tree unit of which priority is 2.

Step 206: through Step 205, the binary tree units are combined for (N-1) times to form a binary tree of the type finally.

Step 207: for protection groups of each type, Step 203 to Step 206 are performed so as to construct M binary trees from M types of protection groups finally.

Step 208: the M binary trees are traversed to determine whether there are two binary trees having the same primary tunnel and backup tunnel; if yes, perform Step 209; otherwise, perform step 210;

Step 209: a root node of the binary tree in which the primary tunnel is located is used to replace a backup tunnel of another binary tree; in other words, if a primary tunnel of a binary tree is the same as a backup tunnel of another binary tree, a root node of such a binary tree is used to replace a backup tunnel of another binary tree.

Step 210: the adjustment is finished and multi-protection overlapped protection groups are implemented.

In Step 203, if there is only one protection group in a certain type of protection groups, i.e., N is equal to 1, then a binary tree unit constructed according to the protection group is a binary tree of the type.

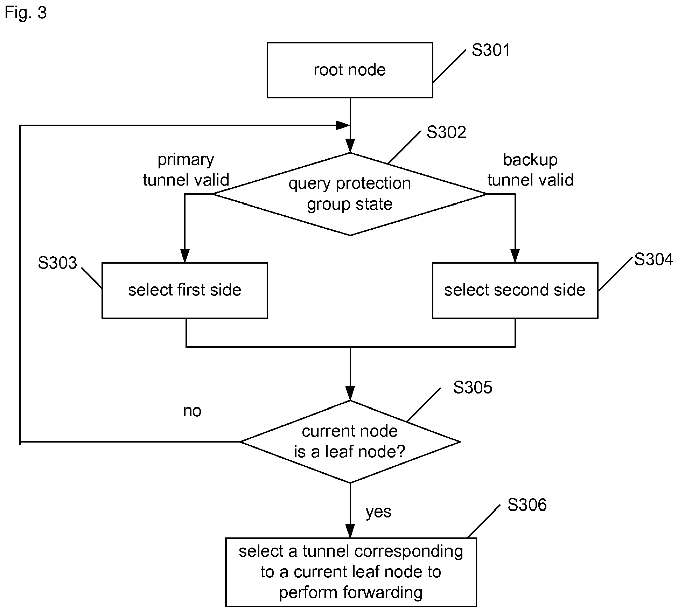

Fig. 3 shows a flowchart illustrating path selection according to an embodiment of the disclosure.

As shown in Fig. 3, Step 301: when a tunnel is monitored to be invalid or normal, each protection group of the multi-protection overlapped protection groups checks tunnel state information of all leaf nodes of a first side of the protection group; the protection group state is that the primary tunnel is valid if a tunnel in a normal state exists; otherwise, each protection group of the multi-protection overlapped protection groups checks tunnel state information of all leaf nodes of a second side of the protection group; the protection group state is that the backup tunnel is valid if a tunnel in a normal state exists; otherwise, the protection group state is invalid.

Step 302: going downwards from the root node of the multi-protection overlapped protection groups, the protection group state is queried; if the protection group state is primary valid, perform Step 303; if the protection group state is backup valid, perform Step 304.

Step 303: a first side node is selected.

Step 304: a second side node is selected.

Step 305: it is determined whether a current node is a leaf node; if yes, perform Step 306; otherwise, perform Step 302.

Step 306: a tunnel corresponding to a current leaf node is selected to forward network traffic.

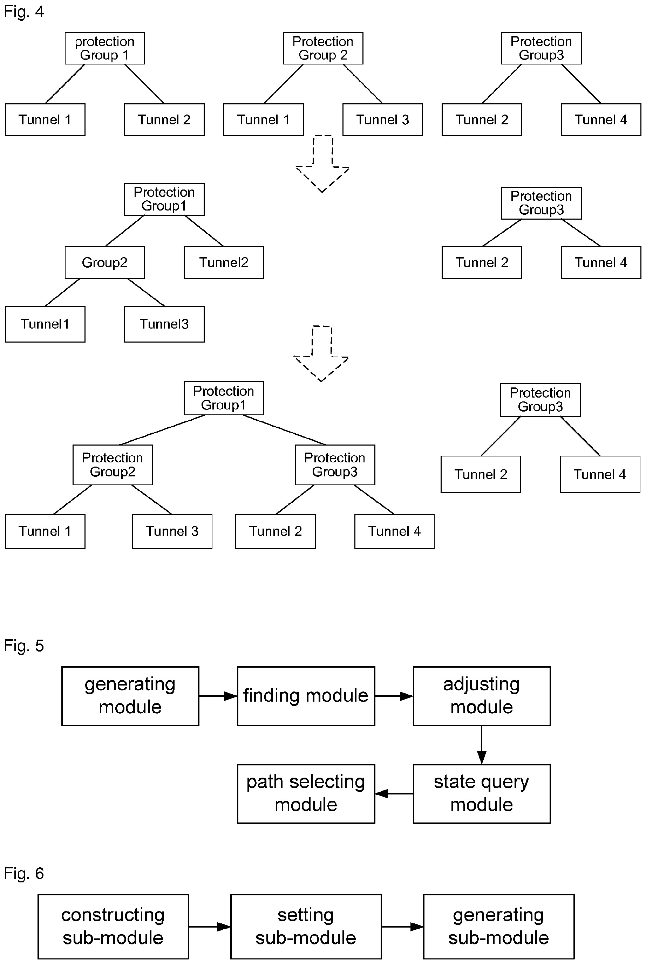

Fig. 4 shows examples for implementing establishment of the multi-protection overlapped protection group. As shown in Fig. 4, four tunnels and three protection groups are included. Tunnel 1 and tunnel 2 form protection group 1, tunnel 1 is a primary tunnel and tunnel 2 is a backup tunnel; tunnel 1 and tunnel 3 form protection group 2, tunnel 1 is a primary tunnel and tunnel 3 is a backup tunnel; tunnel 2 and tunnel 4 form protection group 3, tunnel 2 is a primary tunnel and tunnel 4 is a backup tunnel.

The protection groups are divided into two types depends on whether the protection groups have the same primary tunnel. The first type includes protection group 1 and protection group 2 with tunnel 1 as a primary tunnel and the second type includes protection group 3 with tunnel 2 as a primary tunnel.

The priorities of the protection groups in the first type are set.The priority of protection group 1 is set as 1 and the priority of protection group 2 is set as 2. According to the protection group number and primary tunnel number as well as backup tunnel number thereof, each protection group is constructed into a binary tree unit with a root node thereof being the protection group, a first side leaf node being a primary tunnel of the protection group and a second side leaf node being a backup tunnel of the protection group so as to form two binary tree units of the type. The two formed binary tree units are combined. A primary tunnel of a binary tree whose priority is 1 is replaced with a binary tree unit whose priority is 2 to form a binary tree finally; a root node of the binary tree is protection group 1 with the lowest priority, a first side node comprises the primary tunnel 1 located at the very bottom level and protection group 2 of the binary tree, and a second side node is the backup tunnel 2 of the binary tree protection group 1 and the backup tunnel 3 of protection group 2. Since the second type in the present embodiment only includes protection group 3, a binary tree unit formed by protection group 3 is a binary tree of the second type.

The two binary trees are traversed to find that the primary tunnel 2 of the second binary tree is the same as the backup tunnel 2 of protection group 1 of the first binary tree.Therefore, the backup tunnel 2 of the first binary tree is replaced by the root node protection group 3 of the second binary tree.

After the adjustment, the multi-protection overlapped protection groups are implemented.

### Example 1

In an initial state, leaf nodes are tunnel 1, tunnel 3, tunnel 2 and tunnel 4 from left to right in turn and are all normal.For protection group 2, a first side leaf node tunnel 1 is in a normal state, thus the state of protection group 2 is primary valid; for protection gropu 1, all leaf nodes tunnel 1 and tunnel 3 of a first side are in a normal state, therefore the state of protection group 1 is primary valid.

Going downwards from the root node protection group 1 , the state of protection group 1 is primary valid, then the first side is selected to reach protection group 2; for protection group 2, the state is primary valid, then the first side is selected continuously to reach the leaf node tunnel 1; therefore, network traffic is on tunnel 1.

### Example 2

When it is detected that tunnel 1 is invalid while tunnel 3, tunnel 2 and tunnel 4 are normal, for protection group 2, the state of the first side leaf node tunnel 1 is invalid and the state of a second side leaf node tunnel 3 is normal. Therefore, the state of protection group 2 is that the backup tunnel is valid; for protection group 1, the first side includes the leaf nodes tunnel 1 and tunnel 3 and the state of tunnel 3 is normal. Therefore, the state of protection group 3 is primary valid.

Going downwards from the root node protection group 1, the state of protection group 1 is primary valid, then the first side is selected to reach protection group 2; for protection group 2, the state is backup valid, then the second side is selected continuously to reach the leaf node tunnel 3; therefore, network traffic is on tunnel 3.

### Example 3

When both tunnel 1 and tunnel 3 are invalid while tunnel 2 and tunnel 4 are normal, for protection group 2, the state of the first side leaf node tunnel 1 and the state of the second side leaf node tunnel 3 are invalid. Therefore, the current state of protection group 2 is invalid; for protection group 1, the states of all leaf nodes tunnel 1 and tunnel 3 on the first side are invalid and the state of the second side leaf node tunnel 2 is normal, thus protection group 1 is switched to the backup tunnel; for protection group 3, the state of the first side leaf node tunnel 2 and the state of the second leaf node tunnel 4 are normal, then protection group 3 is switched to the backup tunnel.

Going downwards from the root node , the state of protection group 1 is that the backup valid, then the first side is selected to reach protection group 3; for protection group 3, the state is primary valid, then the first side is selected continuously to reach the leaf node tunnel 2; therefore, traffic is on tunnel 2.

### Example 4

When tunnel 1, tunnel 2 and tunnel 3 are invalid and tunnel 4 is normal, for protection group 2, the state of the first side leaf node tunnel 1 and the state of the second side leaf node tunnel 3 are invalid, thus the current state of protection group 2 is invalid; for protection group 1, the states of all leaf nodes tunnel 1 and tunnel 3 on the first side are invalid and the state of the second side leaf node tunnel 4 is normal, then protection group 1 is switched to the backup tunnel; for protection group 3, the state of the first side leaf node tunnel 2 is invalid, the state of the second side leaf node tunnel 4 is normal, then protection group 3 is switched to the backup tunnel.

Going downwards from the root node, the state of protection group 1 is backup valid, then the second side is selected to reach protection group 3; for protection group 3, the state is backup valid, then the first side is selected to reach the leaf node tunnel 4; therefore, traffic is on tunnel 4.

Fig. 5 shows a structural diagram of a device for implementing the multi-protection overlapped protection group according to an embodiment of the disclosure. As shown in Fig. 5, the device for implementing the protection groups includes a generating module, a finding module and an adjusting module.

The generating module is configured to construct M binary trees from multiple protection groups in a network according to their respective types, each protection group comprising a primary tunnel and a backup tunnel. Each binary tree has a unique primary tunnel, a first side node of the binary tree includes a primary tunnel at a bottom level and protection groups of the binary tree, and a second side node includes backup tunnels of the protection group of the binary tree. Specifically, the generating module classifies the protection groups in the network of which the primary tunnel is the same into a type, thus dividing the protection groups in the network into M types, each type for constructing a binary tree, and M binary trees are constructed in total. The root node of the binary tree is the protection group of the lowest priority in the type, the primary tunnel of the binary tree forms the common tunnel of all the protection groups in the binary tree, and the remaining tunnels are the backup tunnels of the binary tree.

The finding module is configured to traverse the M binary trees to find out two binary trees having a same primary tunnel and backup tunnel respectively, and perform binary tree adjustment for (M-1) times, so as to implement multi-protection overlapped protection groups.

The adjusting module is configured to, during each binary tree adjustment, use a root node of the binary tree in which the primary tunnel is located to replace a backup tunnel of another binary tree. In other words, the finding module checks if the backup tunnel of the current binary tree is as same as the primary tunnel of another binary tree, if yes, the adjusting module replaces the backup tunnel of the current binary tree with the root node of the another binary tree.

The device for implementing the protection groups may further include a state query module and a path selection module.

The state query module is configured, when a tunnel is detected as invalid or normal, to be used by each protection group of the multi-protection overlapped protection groups to check tunnel state information of all leaf nodes at the first side of the protection group, wherein the protection group state is placed as primary valid if there is a normal tunnel; otherwise, to be used by each protection group of the multi-protection overlapped protection groups to check tunnel state information of all leaf nodes at a second side of the protection group, wherein the protection group state is placed as backup valid if there is a normal tunnel; otherwise, the protection group state is placed as invalid. Specifically, the state query module is configured to determine the state of each protection group so as to perform path selection.

The path selecting module is configured to, go downwards from the root node of the multi-protection overlapped protection groups, select a first side node if the protection group state is primary valid and select a second side node if the protection group state is backup valid, until a current valid tunnel is determined.

The generating module includes a constructing sub-module, a setting sub-module and a generating sub-module. As shown in Fig. 6, the constructing sub-module is configured to construct N binary tree units from N protection groups having a same primary tunnel, wherein a root node of each binary tree unit is a protection group, a first side node is a primary tunnel of the protection group and a second side node is a backup tunnel of the protection group; the setting sub-module is configured to set priorities of the N protection groups from lowest to highest as 1,2......N and perform binary tree unit combination for (N-1) times; and the generating sub-module is configured to, during each binary tree unit combination, replace a primary tunnel of a binary tree of which priority is (N-1) with a root node of a binary tree unit of which priority is N. The M and N meet M ≥ 1, N ≥ 1.

To sum up, the disclosure can implement switching logic of protection groups conveniently and quickly in the multi-protection overlapping scenario through setting binary trees for the protection groups and tunnels to which the protection groups belong, thereby achieving the effect of multi-protection.

Though the disclosure has been described in detail above, the disclosure is not limited to this. Those skilled in the art can make all kinds of modifications according to the principle of the disclosure. Therefore, all modifications made according to the principle of the disclosure should be considered as falling into the protection scope of the disclosure.

### INDUSTRIAL APPLICABILITY

The disclosure can set switching logic of protection groups properly in the multi-protection overlapping scenario to implement timely, convenient and quick service switching.

## Claims

1. A method for implementing multi-protection overlapped protection groups, comprising:
Step A: constructing M binary trees from multiple protection groups in a network according to their respective types, each protection group comprising a primary tunnel and a backup tunnel, wherein each binary tree has a unique primary tunnel, a first side node of the binary tree includes a primary tunnel at a bottom level and protection groups of the binary tree, and a second side node includes backup tunnels of the protection groups of the binary tree;
Step B: traversing the M binary trees to find out two binary trees in which a primary tunnel of one of the two binary trees is the same as a backup tunnel of the other of the two binary trees, performing each binary tree adjustment by using a root node of the binary tree in which the primary tunnel is located to replace the backup tunnel of the other binary tree;
Step C: performing the binary tree adjustment for, M-1, times;
wherein the protection groups having the same primary tunnel are classified into a type;
wherein in Step A, generating each binary tree includes:
constructing N binary tree units from N protection groups having a same primary tunnel, wherein a root node of each binary tree unit is a protection group, a first side node is a primary tunnel of the protection group and a second side node is a backup tunnel of the protection group;
setting priorities of the N protection groups from lowest to highest as 1,2......N and performing binary tree unit combination for, N-1, times; and
during each binary tree unit combination, replacing a primary tunnel of a binary tree of which priority is, N-1, with a root node of a binary tree unit of which priority is N.

2. The method for implementing the protection groups according to claim 1, further comprising a protection group state query step D performed after step C, including:
when a tunnel is detected as invalid or normal, checking, by each protection group of the multi-protection overlapped protection groups, tunnel state information of all leaf nodes at the first side of the protection group, and placing the protection group state as primary valid if there is a normal tunnel;
otherwise, checking, by each protection group of the multi-protection overlapped protection groups, tunnel state information of all leaf nodes at a second side of the protection group, and placing the protection group state as backup valid if there is a normal tunnel;
otherwise, placing the protection group state as invalid.

3. The method for implementing the protection groups according to claim 2, further comprising a path selection step E performed after step D, including
going downwards from the root node of the multi-protection overlapped protection groups, selecting a first side node if the protection group state is primary valid and selecting a second side node if the protection group state is backup valid, until a current valid tunnel is determined.

4. The method for implementing the protection groups according to any one of claims 1 to 3, wherein M ≥ 1, N ≥ 1.

5. A device for implementing multi-protection overlapped protection groups, comprising:
a generating module, configured to construct M binary trees from multiple protection groups in a network according to their respective types, each protection group comprising a primary tunnel and a backup tunnel, wherein each binary tree has a unique primary tunnel, a first side node of the binary tree includes a primary tunnel at a bottom level and protection groups of the binary tree, and a second side node includes backup tunnels of the protection groups of the binary tree;
a finding module, configured to traverse the M binary trees to find out two binary trees in which a primary tunnel of one of the two binary trees is the same as a backup tunnel of the other of the two binary trees; and
an adjusting module, configured to, during each binary tree adjustment, use a root node of the binary tree in which the primary tunnel is located to replace a backup tunnel of another binary tree and perform the binary tree adjustment for, M-1, times;
wherein the protection groups having the same primary tunnel are classified into a type;
wherein the generating module includes:
a constructing sub-module, configured to construct N binary tree units from N protection groups having a same primary tunnel, wherein a root node of each binary tree unit is a protection group, a first side node is a primary tunnel of the protection group and a second side node is a backup tunnel of the protection group;
a setting sub-module, configured to set priorities of the N protection groups from lowest to highest as 1,2......N and perform binary tree unit combination for, N-1, times; and
a generating sub-module configured to, during each binary tree unit combination, replace a primary tunnel of a binary tree of which priority is, N-1, with a root node of a binary tree unit of which priority is N.

6. The device for implementing the protection groups according to claim 5, further comprising:
a state query module configured, when a tunnel is detected as invalid or normal, to be used by each protection group of the multi-protection overlapped protection groups to check tunnel state information of all leaf nodes at the first side of the protection group, wherein the protection group state is placed as primary valid if there is a normal tunnel; otherwise, to be used by each protection group of the multi-protection overlapped protection groups to check tunnel state information of all leaf nodes at a second side of the protection group, wherein the protection group state is placed as backup valid if there is a normal tunnel; otherwise, the protection group state is placed as invalid.

7. The device for implementing the protection groups according to claim 6, further comprising:
a path selecting module configured to, go downwards from the root node of the multi-protection overlapped protection groups, select a first side node if the protection group state is primary valid and select a second side node if the protection group state is backup valid, until a current valid tunnel is determined.

8. The device for implementing the protection groups according to any one of claims 5 to 7, wherein M ≥ 1, N ≥ 1.

## Patentansprüche

1. Verfahren zum Ausführen sich überlappender Schutzgruppen mit Mehrfachschutz, umfassend:
Schritt A: Erstellen von M Binärbäumen aus mehreren Schutzgruppen in einem Netzwerk je nach ihrem jeweiligen Typ, wobei jede Schutzgruppe einen primären Tunnel und einen Backup-Tunnel umfasst, wobei jeder Binärbaum einen einzigartigen primären Tunnel aufweist, ein erster Seitenknoten des Binärbaums einen primären Tunnel auf einer untersten Ebene und Schutzgruppen des Binärbaums umfasst und ein zweiter Seitenknoten Backup-Tunnel der Schutzgruppen des Binärbaums umfasst;
Schritt B: Überqueren der M Binärbäume, um zwei Binärbäume zu finden, in denen ein primärer Tunnel eines der zwei Binärbäume derselbe ist wie ein Backup-Tunnel des jeweils anderen der zwei Binärbäume, wobei jede Binärbaumeinstellung unter Verwendung eines Wurzelknotens des Binärbaums, in dem sich der primäre Tunnel befindet, durchgeführt wird, um den Backup-Tunnel des anderen Binärbaums zu ersetzen;
Schritt C: M-1-maliges Ausführen der Binärbaumeinstellung;
wobei die Schutzgruppen mit demselben primären Tunnel als ein Typ eingestuft werden;
wobei im Schritt A die Erstellung jedes Binärbaums umfasst:
Konstruieren von N Binärbaumeinheiten aus N Schutzgruppen mit einem primären Tunnel, wobei ein Wurzelknoten jeder Binärbaumeinheit eine Schutzgruppe ist, ein erster Seitenknoten ein primärer Tunnel der Schutzgruppe ist und ein zweiter Seitenknoten ein Backup-Tunnel der Schutzgruppe ist;
Einstellen von Prioritäten der N Schutzgruppen von unterster bis höchste Priorität als 1, 2...N und N-1-maliges Kombinieren von Binärbaumeinheiten; und
Ersetzen eines primären Tunnels eines Binärbaums, dessen Priorität N-1 ist, bei jedem Kombinieren von Binäurbaumeinheiten
durch einen Wurzelknoten einer Binärbaumeinheit, deren Priorität N ist.

2. Verfahren nach Anspruch 1, ferner umfassend einen nach dem Schritt C erfolgenden Schritt D des Abfragens des Zustands einer Schutzgruppe, umfassend:
wenn ein Tunnel als ungültig oder normal erkannt wird, Überprüfen der Tunnelzustandsdaten aller Blattknoten auf der ersten Seite der Schutzgruppe durch jede Schutzgruppe der sich überlappenden Schutzgruppen mit Mehrfachschutz, und Festsetzen des Zustands der Schutzgruppe als primär und gültig, wenn ein normaler Tunnel vorhanden ist;
sonst: Überprüfen der Tunnelzustandsdaten aller Blattknoten auf einer zweiten Seite der Schutzgruppe durch jede Schutzgruppe der sich überlappenden Schutzgruppen mit Mehrfachschutz, und Festsetzen des Zustands der Schutzgruppe als Backup und gültig, wenn ein normaler Tunnel vorhanden ist;
sonst: Festsetzen des Zustands der Schutzgruppe als ungültig.

3. Verfahren nach Anspruch 2, ferner umfassend einen nach dem Schritt D erfolgenden Schritt E des Wählens eines Pfads, umfassend:
abwärts gehend vom Wurzelknoten der sich überlappenden Schutzgruppen mit Mehrfachschutz, Auswählen eines ersten Seitenknotens, wenn der Zustand der Schutzgruppe primär und gültig ist, und Auswählen eines zweiten Seitenknotens, wenn der Zustand der Schutzgruppe Backup und gültig ist, bis ein aktuell gültiger Tunnel bestimmt wird.

4. Verfahren nach einem der Ansprüche 1 - 3, wobei M ≥ 1, N ≥ 1.

5. Vorrichtung zum Ausführen sich überlappender Schutzgruppen mit Mehrfachschutz, umfassend:
ein Erstellungsmodul, das zum Konstruieren von M Binärbäumen aus mehreren Schutzgruppen in einem Netzwerk je nach ihrem jeweiligen Typ konfiguriert ist, wobei jede Schutzgruppe einen primären Tunnel und einen Backup-Tunnel umfasst, wobei jeder Binärbaum einen einzigartigen primären Tunnel aufweist, ein erster Seitenknoten des Binärbaums einen primären Tunnel auf einer untersten Ebene und Schutzgruppen des Binärbaums umfasst und ein zweiter Seitenknoten Backup-Tunnel der Schutzgruppen des Binärbaums umfasst;
ein Suchmodul, das derart konfiguriert ist, dass es die M Binärbäume überquert, um zwei Binärbäume zu finden, in denen ein primärer Tunnel von einem der zwei Binärbäume derselbe ist wie ein Backup-Tunnel des jeweils anderen der zwei Binärbäume; und
ein Einstellungsmodul, das derart konfiguriert ist, dass es bei jeder Einstellung eines Binärbaums einen Wurzelknoten des Binärbaums verwendet, in dem sich der primäre Tunnel befindet, um einen Backup-Tunnel eines anderen Binärbaums zu ersetzen, und die Einstellung des Binärbaums M-1-mal ausführt;
wobei die Schutzgruppen mit demselben primären Tunnel als ein Typ eingestuft werden;
wobei das Erstellungsmodul umfasst:
ein Konstruktions-Submodul, das zum Konstruieren von N Binärbaumeinheiten aus N Schutzgruppen mit einem primären Tunnel konfiguriert ist, wobei ein Wurzelknoten jeder Binärbaumeinheit eine Schutzgruppe ist, ein erster Seitenknoten ein primärer Tunnel der Schutzgruppe ist und ein zweiter Seitenknoten ein Backup-Tunnel der Schutzgruppe ist;
ein Einstellungs-Untermodul, das zum Festlegen von Prioritäten der N Schutzgruppen von unterster bis höchste Priorität als 1, 2,...N und zum N-1-maligen Kombinieren von Binärbaumeinheiten konfiguriert ist;
und
ein Erstellungs-Submodul, das derart konfiguriert ist, dass es bei jeder Kombination von Binärbaumeinheiten einen primären Tunnel eines Binärbaums, dessen Priorität N-1 ist, durch einen Wurzelknoten einer Binärbaumeinheit, deren Priorität N ist, ersetzt.

6. Vorrichtung nach Anspruch 5, ferner umfassend:
ein Statusabfragemodul, das derart konfiguriert ist, dass, wenn ein Tunnel als ungültig oder normal erkannt wird, es durch jede Schutzgruppe der sich überlappenden Schutzgruppen mit Mehrfachschutz verwendet wird, um die Tunnelzustandsdaten aller Blattknoten auf der ersten Seite der Schutzgruppe zu überprüfen, wobei der Zustand der Schutzgruppe als primär und gültig festgesetzt wird, wenn ein normaler Tunnel vorhanden ist; sonst wird es durch jede Schutzgruppe der sich überlappenden Schutzgruppen mit Mehrfachschutz verwendet, um die Tunnelzustandsdaten aller Blattknoten auf einer zweiten Seite der Schutzgruppe zu überprüfen, wobei der Zustand der Schutzgruppe als Backup und gültig festgesetzt wird, wenn ein normaler Tunnel vorhanden ist; sonst wird der Zustand der Schutzgruppe als ungültig festgesetzt.

7. Vorrichtung nach Anspruch 6, ferner umfassend:
ein Pfadauswahlmodul, das derart konfiguriert ist, dass es abwärts gehend vom Wurzelknoten der sich überlappenden Schutzgruppen mit Mehrfachschutz, einen erste Seitenknoten auswählt, wenn der Zustand der Schutzgruppe primär und gültig ist, und einen zweiten Seitenknoten auswählt, wenn der Zustand der Schutzgruppe Backup und gültig ist, bis ein aktuell gültiger Tunnel bestimmt wird.

8. Vorrichtung nach einem der Ansprüche 5 - 7, wobei M ≥ 1, N ≥ 1.

## Revendications

1. Procédé de mise en oeuvre de groupes de protection recouverts multiprotection, comprenant les étapes ci-dessous consistant à :
Étape A : construire M arbres binaires à partir de multiples groupes de protection dans un réseau, en fonction de leurs types respectifs, chaque groupe de protection comprenant un tunnel principal et un tunnel auxiliaire, dans lequel chaque arbre binaire présente un tunnel principal unique, un premier noeud latéral de l'arbre binaire inclut un tunnel principal à un niveau inférieur et des groupes de protection de l'arbre binaire, et un second noeud latéral inclut des tunnels auxiliaires des groupes de protection de l'arbre binaire ;
Étape B : parcourir les M arbres binaires pour découvrir deux arbres binaires dans lesquels un tunnel principal de l'un des deux arbres binaires est identique à un tunnel auxiliaire de l'autre des deux arbres binaires, et mettre en oeuvre chaque ajustement d'arbre binaire en utilisant un noeud racine de l'arbre binaire dans lequel le tunnel principal est situé, en vue de remplacer le tunnel auxiliaire de l'autre arbre binaire ;
Étape C : mettre en oeuvre l'ajustement d'arbre binaire M-1 fois ;
dans lequel les groupes de protection présentant le même tunnel principal sont classés en un type ;
dans lequel, à l'étape A, l'étape de génération de chaque arbre binaire inclut les étapes ci-dessous consistant à :
construire N unités d'arbre binaire à partir de N groupes de protection présentant un même tunnel principal, dans lequel un noeud racine de chaque unité d'arbre binaire est un groupe de protection, un premier noeud latéral est un tunnel principal du groupe de protection et un second noeud latéral est un tunnel auxiliaire du groupe de protection ;
définir des priorités des N groupes de protection, de la priorité la plus faible à la plus élevée, sous la forme 1, 2, ..., N et mettre en oeuvre une combinaison d'unités d'arbre binaire N-1 fois ; et
au cours de chaque combinaison d'unités d'arbre binaire, remplacer un tunnel principal d'un arbre binaire dont la priorité est N-1 par un noeud racine d'une unité d'arbre binaire dont la priorité est N.

2. Procédé de mise en oeuvre des groupes de protection selon la revendication 1, comprenant en outre une étape D d'interrogation d'état de groupe de protection, mise en oeuvre après l'étape C, incluant les étapes ci-dessous consistant à :
lorsqu'un tunnel est détecté comme étant non valide ou normal, vérifier, par le biais de chaque groupe de protection des groupes de protection recouverts multiprotection, des informations d'état de tunnel de tous les noeuds feuilles au niveau du premier côté du groupe de protection, et placer l'état de groupe de protection en tant qu'état principal valide s'il existe un tunnel normal ;
sinon, vérifier, par le biais de chaque groupe de protection des groupes de protection recouverts multiprotection, des informations d'état de tunnel de tous les noeuds feuilles au niveau d'un second côté du groupe de protection, et placer l'état de groupe de protection en tant qu'état auxiliaire valide s'il existe un tunnel normal ;
sinon, placer l'état de groupe de protection comme non valide.

3. Procédé de mise en oeuvre des groupes de protection selon la revendication 2, comprenant en outre une étape E de sélection de chemin mise en oeuvre après l'étape D, incluant les étapes ci-dessous consistant à :
en allant vers le bas à partir du noeud racine des groupes de protection recouverts multiprotection, sélectionner un premier noeud latéral si l'état de groupe de protection est l'état principal valide, et sélectionner un second noeud latéral si l'état de groupe de protection est l'état auxiliaire valide, jusqu'à ce qu'un tunnel valide en cours soit déterminé.

4. Procédé de mise en oeuvre des groupes de protection selon l'une quelconque des revendications 1 à 3, dans lequel M ≥ 1 et N ≥ 1.

5. Dispositif destiné à mettre en oeuvre des groupes de protection recouverts multiprotection, comprenant :
un module de génération, configuré de manière à construire M arbres binaires à partir de multiples groupes de protection dans un réseau, en fonction de leurs types respectifs, chaque groupe de protection comprenant un tunnel principal et un tunnel auxiliaire, dans lequel chaque arbre binaire présente un tunnel principal unique, un premier noeud latéral de l'arbre binaire inclut un tunnel principal à un niveau inférieur et des groupes de protection de l'arbre binaire, et un second noeud latéral inclut des tunnels auxiliaires des groupes de protection de l'arbre binaire ;
un module de recherche, configuré de manière à parcourir les M arbres binaires pour découvrir deux arbres binaires dans lesquels un tunnel principal de l'un des deux arbres binaires est identique à un tunnel auxiliaire de l'autre des deux arbres binaires ; et
un module d'ajustement, configuré de manière à, au cours de chaque ajustement d'arbre binaire, utiliser un noeud racine de l'arbre binaire dans lequel le tunnel principal est situé, en vue de remplacer un tunnel auxiliaire d'un autre arbre binaire, et mettre en oeuvre l'ajustement d'arbre binaire M-1 fois ;
dans lequel les groupes de protection présentant le même tunnel principal sont classés en un type ;
dans lequel, le module de génération inclut :
un sous-module de construction, configuré de manière à construire N unités d'arbre binaire à partir de N groupes de protection présentant un même tunnel principal, dans lequel un noeud racine de chaque unité d'arbre binaire est un groupe de protection, un premier noeud latéral est un tunnel principal du groupe de protection et un second noeud latéral est un tunnel auxiliaire du groupe de protection ;
un sous-module de définition, configuré de manière à définir des priorités des N groupes de protection, de la priorité la plus faible à la plus élevée, sous la forme 1, 2, ..., N, et mettre en oeuvre une combinaison d'unités d'arbre binaire N-1 fois ; et
un sous-module de génération configuré de manière à, au cours de chaque combinaison d'unités d'arbre binaire, remplacer un tunnel principal d'un arbre binaire dont la priorité est N-1 par un noeud racine d'une unité d'arbre binaire dont la priorité est N.

6. Dispositif destiné à mettre en oeuvre les groupes de protection selon la revendication 5, comprenant en outre :
un module d'interrogation d'état configuré, lorsqu'un tunnel est détecté comme étant non valide ou normal, de manière à être utilisé par chaque groupe de protection des groupes de protection recouverts multi-protection en vue de vérifier des informations d'état de tunnel de tous les noeuds feuilles au niveau du premier côté du groupe de protection, dans lequel l'état de groupe de protection est placé en tant qu'état principal valide s'il existe un tunnel normal ; sinon, de manière à être utilisé par chaque groupe de protection des groupes de protection recouverts multiprotection, en vue de vérifier des informations d'état de tunnel de tous les noeuds feuilles au niveau d'un second côté du groupe de protection, dans lequel l'état de groupe de protection est placé en tant qu'état auxiliaire valide s'il existe un tunnel normal ; sinon, l'état de groupe de protection est placé comme non valide.

7. Dispositif destiné à mettre en oeuvre les groupes de protection selon la revendication 6, comprenant en outre :
un module de sélection de chemin configuré de manière à, en allant vers le bas à partir du noeud racine des groupes de protection recouverts multi-protection, sélectionner un premier noeud latéral si l'état de groupe de protection est l'état principal valide, et sélectionner un second noeud latéral si l'état de groupe de protection est l'état auxiliaire valide, jusqu'à ce qu'un tunnel valide en cours soit déterminé.

8. Dispositif destiné à mettre en oeuvre les groupes de protection selon l'une quelconque des revendications 5 à 7, dans lequel M ≥ 1 et N ≥ 1.
